# EUROPEAN PATENT SPECIFICATION

(11) **EP 1 855 864 B1**
(45) Date of publication and mention of the grant of the patent: **17.10.2012**
(21) Application number: 06737916.4
(22) Date of filing: 09.03.2006
(51) Int. Cl.: B29C 43/18, F16J 15/12, B32B 15/20

(54) **Bonding perfluoroelastomers to aluminum**
Bindung von Perfluorelastomeren an Aluminium
Liaison de perfluoroelastomeres avec de l'aluminium

(30) Priority: 10.03.2005 US 660265 P; 10.02.2006 US 352497
(43) Date of publication of application: 21.11.2007
(73) Proprietor: E. I. du Pont de Nemours and Company, Wilmington, DE 19898 (US)
(72) Inventor: MINOWA, Norihisa, Kawasaki-shi, Kanagawa 210-0022 (JP); TAKAHASHI, Kohtaro, Iwatsuki, Saitama 339-0032 (JP)
(74) Representative: Heinemann, Monica
(86) International application number: PCT/US2006/008786
(87) International publication number: WO 2006/099235

(56) References cited:
- EP-A- 0 352 608
- PATENT ABSTRACTS OF JAPAN vol. 2003, no. 12, 5 December 2003 (2003-12-05) & JP 2004 036739 A (NOK CORP), 5 February 2004 (2004-02-05) cited in the application
- PATENT ABSTRACTS OF JAPAN vol. 2000, no. 08, 6 October 2000 (2000-10-06) & JP 2000 127199 A (BRIDGESTONE CORP), 9 May 2000 (2000-05-09) cited in the application

## Description

### FIELD OF THE INVENTION

The present invention relates to a process for bonding perfluoroelastomers to an aluminum substrate.

### BACKGROUND OF THE INVENTION

Bonding or adhesion of perfluoroelastomers to aluminum substrates is important for some end use applications such as valve seals, piston seals, and diaphragms employed in equipment that is utilized in the manufacture of semiconductors, chemical processing and analytical instrumentation. Conventional perfluoroelastomers comprise copolymerized units of tetrafluoroethylene, perfluoro(methyl vinyl ether) and a cure site monomer such as a nitrile group-containing fluorovinyl ether, a nitrile group containing-fluoroolefin, an iodine- or bromine-containing fluorovinyl ether or an iodine- or bromine-containing fluoroolefin. Because of the chemical inertness of perfluoroelastomers, bonding to the surfaces of aluminum substrates is difficult.

The use of adhesive primers or bonding agents to improve the bonding strength of perfluoroelastomers and aluminum substrates is undesirable due to both economic reasons and the properties of the primer or agent. Adhesives and bonding agents may decompose in the high temperature, corrosive environments where perfluoroelastomers are often employed. This could lead to separation of the perfluoroelastomer from the aluminum substrate, concomitant loss of sealing and contamination of the environment being sealed.

Published Japanese Patent Application 2000127199A discloses injection molded products comprising a surface treated metal plate and a thermoplastic material such as a styrenic thermoplastic elastomer. The metal plate is pretreated by either an anodized aluminum treatment, unsealed anodized aluminum treatment, acid etching, galvanized chromate treatment or sand blasting.

Published Japanese Patent Application 2004036739A discloses a process for bonding a fluoroelastomer to an anodic oxidation film treated aluminum substrate to form a gasket. The fluoroelastomer comprises copolymerized units of vinylidene fluoride, hexafluoropropylene and, optionally, tetrafluoroethylene and thus contains a significant amount of hydrogen atoms, making it chemically distinct from perfluoroelastomers. It would be desirable to improve the adhesion of perfluoroelastomers to the surface of aluminum substrates without the use of adhesive primers or bonding agents.

EP-A-0 352 608 discloses a PTFE-metal bond by using compression moulding.

### SUMMARY OF THE INVENTION

The present invention is directed to a process for bonding a perfluoroelastomer to a surface of an aluminum substrate as defined in appended claim 1. Preferred embodiments are disclosed in the subclaims. The process comprises:
a) anodizing a surface of an aluminum substrate to form a porous surface; and
b) compression molding and vulcanizing a curable perfluoroelastomer onto said porous surface to form a crosslinked perfluoroelastomer article bonded to said aluminum substrate.

### DETAILED DESCRIPTION OF THE INVENTION

Perfluoroelastomers which may be employed in this invention are generally amorphous polymeric compositions having copolymerized units of at least two principal perfluorinated monomers. Typically, one of the principal comonomers is a perfluoroolefin while the other is a perfluorovinyl ether. Representative perfluorinated olefins include tetrafluoroethylene and hexafluoropropylene. Suitable perfluorinated vinyl ethers include those of the formula

CF₂=CFO(R_{f'}O)ₙ(R_{f''}O)ₘR_{f} (I)

where R_{f'} and R_{f"} are different linear or branched perfluoroalkylene groups of 2-6 carbon atoms, m and n are independently 0-10, and R_{f} is a perfluoroalkyl group of 1-6 carbon atoms.

A preferred class of perfluorinated vinyl ethers includes compositions of the formula

CF₂=CFO(CF₂CFXO)ₙR_{f} (II)

where X is F or CF₃, n is 0-5, and R_{f} is a perfluoroalkyl group of 1-6 carbon atoms.

Most preferred perfluorinated vinyl ethers are those wherein n is 0 or 1 and R_{f} contains 1-3 carbon atoms. Examples of such perfluorinated ethers include perfluoro(methyl vinyl ether) and perfluoro(propyl vinyl ether). Other useful monomers include compounds of the formula

CF₂=CFO[(CF₂)ₘCF₂CFZO]ₙR_{f} (III)

where R_{f} is a perfluoroalkyl group having 1-6 carbon atoms, m = 0 or 1, n = 0-5, and Z = F or CF₃. Preferred members of this class are those in which R_{f} is C₃F₇, m = 0, and n = 1. Additional perfluorinated vinyl ether monomers include compounds of the formula

CF₂=CFO[(CF₂CFCF₃O)ₙ(CF₂CF₂CF₂O)ₘ(CF₂)ₚ]CₓF₂ₓ₊₁ (IV) where m and n = 1-10, p = 0-3, and x = 1-5. Preferred members of this class include compounds where n = 0-1, m = 0-1, and x = 1.

Additional examples of useful perfluorinated vinyl ethers include

CF₂=CFOCF₂CF(CF₃)O(CF₂O)ₘCₙF₂ₙ₊₁ (V)

where n = 1-5, m = 1-3, and where, preferably, n = 1.

Preferred perfluoroelastomer copolymers are comprised of tetrafluoroethylene and at least one perfluorinated vinyl ether as principal monomer units. In such copolymers, the copolymerized perfluorinated ether units constitute from about 15-50 mole percent of total monomer units in the polymer.

The perfluoroelastomer further contains copolymerized units of at least one cure site monomer, generally in amounts of from 0.1-5 mole percent. The range is preferably between 0.3-1.5 mole percent. Although more than one type of cure site monomer may be present, most commonly one cure site monomer is used and it contains at least one nitrile substituent group. Suitable cure site monomers include nitrile-containing fluorinated olefins and nitrile-containing fluorinated vinyl ethers. Useful nitrile-containing cure site monomers include those of the formulas shown below.

CF₂=CF-O(CF₂)ₙ-CN (VI)

where n = 2-12, preferably 2-6;

CF₂=CF-O[CF₂-CFCF₃-O]ₙ-CF₂-CFCF₃-CN (VII)

where n= 0-4, preferably 0-2; and

CF₂=CF-[OCF₂CFCF₃]ₓ-O-(CF₂)ₙ-CN (VIII)

where x = 1-2, and n = 1-4.

Those of formula (VIII) are preferred. Especially preferred cure site monomers are perfluorinated polyethers having a nitrile group and a trifluorovinyl ether group. A most preferred cure site monomer is

CF₂=CFOCF₂CF(CF₃)OCF₂CF₂CN (IX)

i.e. perfluoro(8-cyano-5-methyl-3,6-dioxa-1-octene) or 8-CNVE.

Other cure site monomers include olefins represented by the formula R₁CH=CR₂R₃, wherein R₁ and R₂ are independently selected from hydrogen and fluorine and R₃ is independently selected from hydrogen, fluorine, alkyl, and perfluoroalkyl. The perfluoroalkyl group may contain up to about 12 carbon atoms. However, perfluoroalkyl groups of up to 4 carbon atoms are preferred. In addition, the cure site monomer preferably has no more than three hydrogen atoms. Examples of such olefins include ethylene, vinylidene fluoride, vinyl fluoride, trifluoroethylene, 1-hydropentafluoropropene, and 2-hydropentafluoropropene.

Cure site monomers that contain a bromine or iodine atom include fluorinated olefins or fluorinated vinyl ethers. Such cure site monomers are well known in the art. Specific examples include bromotrifluoroethylene; 4-bromo-3,3,4,4-tetrafluorobutene-1 (BTFB); and others such as vinyl bromide, 1-bromo-2,2-difluoroethylene; perfluoroallyl bromide; 4-bromo-1,1,2-trifluorobutene; 4-bromo-1,1,3,3,4,4-hexafluorobutene; 4-bromo-3-chloro-1,1,3,4,4-pentafluorobutene; 6-bromo-5,5,6,6-tetrafluorohexene; 4-bromoperfluorobutene-1 and 3,3-difluoroallyl bromide. Brominated unsaturated ether cure site monomers useful in the invention include 2-bromo-perfluoroethyl perfluorovinyl ether and fluorinated compounds of the class CF₂Br-R_{f}-O-CF=CF_{2,} such as CF₂BrCF₂O-CF=CF₂, and fluorovinyl ethers of the class ROCF=CFBr or ROCBr=CF₂, where R is a lower alkyl group or fluoroalkyl group, such as CH₃OCF=CFBr or CF₃CH₂ OCF=CFBr.

Iodinated cure site monomers include CHR=CH-Z-CH₂CHR-I, wherein R is -H or -CH₃; Z is a C₁-C₁₈ (per)fluoroalkylene radical, linear or branched, optionally containing one or more ether oxygen atoms, or a (per)fluoropolyoxyalkylene radical as disclosed in U.S. Patent 5,674,959. Other examples of useful iodinated cure site monomers are unsaturated ethers of the formula: I(CH₂CF₂CF₂)ₙOCF=CF₂ and ICH₂CF₂O[CF(CF₃)CF₂O]ₙCF=CF₂, and the like, wherein n=1-3, such as disclosed in U.S. Patent 5,717,036. In addition, suitable iodinated cure site monomers including iodoethylene, 4-iodo-3,3,4,4-tetrafluorobutene-1 (ITFB); 3-chloro-4-iodo-3,4,4-trifluorobutene; 2-iodo-1,1,2,2-tetrafluoro-1-(vinyloxy)ethane; 2-iodo-1-(perfluorovinyloxy)-1,1,2,2-tetrafluoroethylene; 1,1,2,3,3,3-hexafluoro-2-iodo-1-(perfluorovinyloxy)propane; 2-iodoethyl vinyl ether; 3,3,4,5,5,5-hexafluoro-4-iodopentene; and iodotrifluoroethylene are disclosed in U.S. Patent 4,694,045. Allyl iodide and 2-iodo-perfluoroethyl perfluorovinyl ether are also useful cure site monomers.

Another type of cure site monomer which may be incorporated in the perfluoroelastomers employed in this invention is perfluoro(2-phenoxypropyl vinyl ether) and related monomers as disclosed in U.S. Patent No. 3,467,638.

An especially preferred perfluoroelastomer contains copolymerized units of 53.0-79.9 mole percent tetrafluoroethylene, 20.0 - 46.9 mole percent perfluoro(methyl vinyl) ether and 0.4 to 1.5 mole percent nitrile-containing cure site monomer.

Alternatively, or in addition to a cure site monomer, the perfluoroelastomer may contain iodine and/or bromine atoms at terminal positions on the perfluoroelastomer polymer chains. Such atoms may be introduced during polymerization by reaction of an iodine or bromine-containing chain transfer agent as described in U.S. Patent No. 4,243,770.

Perfluoroelastomer compositions employed in this invention are curable (also referred to as vulcanizable), i.e. they are capable of forming crosslinks between elastomer chains.

When the perfluoroelastomer contains copolymerized units of a nitrile-containing cure site monomer, a cure system based on an organotin compound can be utilized. Suitable organotin compounds include allyl-, propargyl-, triphenyl- and allenyl tin curatives. Tetraalkyltin compounds or tetraaryltin compounds are the preferred curing agents for use in conjunction with nitrile-substituted cure sites. The amount of curing agent employed will necessarily depend on the degree of crosslinking desired in the final product as well as the type and concentration of reactive moieties in the perfluoroelastomer. In general, about 0.5-10 parts by weight per 100 parts elastomer (phr) of curing agent can be used, and 1-4 phr is satisfactory for most purposes. It is believed that the nitrile groups trimerize to form s-triazine rings in the presence of curing agents such as organotin, thereby crosslinking the perfluoroelastomer. The crosslinks are thermally stable, even at temperatures of 275°C and above.

A preferred cure system, useful for perfluoroelastomers containing nitrile-containing cure sites, utilizes bis(aminophenols) and bis(aminothiophenols) of the formulas 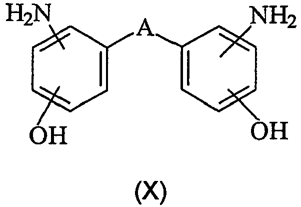 and 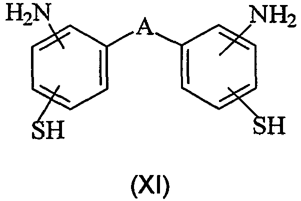 and tetraamines of the formula 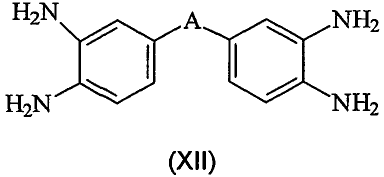 where A is SO₂, O, CO, alkyl of 1-6 carbon atoms, perfluoroalkylene of 1-10 carbon atoms, or a carbon-carbon bond linking the two aromatic rings. The amino and hydroxyl or thio groups in formulas X and XI above are adjacent to each other on the benzene rings and are interchangeably in the meta and para positions with respect to the group A. Preferably, the curing agent is a compound selected from the group consisting of 4,4'-[2,2,2-trifluoro-1-(trifluoromethyl)ethylidene]bis(2-aminophenol); 4,4'-sulfonylbis(2-aminophenol); 3,3'-diaminobenzidine; and 3,3',4,4'-tetraaminobenzophenone. The first of these is the most preferred and will be referred to as bis(aminophenol) AF. The curing agents can be prepared as disclosed in U.S. Patent Number 3,332,907 to Angelo. Bis(aminophenol) AF can be prepared by nitration of 4,4'-[2,2,2-trifluoro-1-(trifluoromethyl)ethylidene]-bisphenol (i.e. bisphenol AF), preferably with potassium nitrate and trifluoroacetic acid, followed by catalytic hydrogenation, preferably with ethanol as a solvent and a catalytic amount of palladium on carbon as catalyst. The level of curing agent should be chosen to optimize the desired properties of the vulcanizate. In general, a slight excess of curing agent over the amount required to react with all the cure sites present in the perfluoroelastomer is used. Typically, 0.5-5 parts by weight of the curative per 100 parts of elastomer is required. The preferred range is 1-2 phr.

Other curatives suitable for vulcanizing perfluoroelastomers having nitrile cure sites include ammonia, the ammonium salts of inorganic or organic acids (e.g. ammonium perfluorooctanoate) as disclosed in U.S. Patent No. 5,565,512, and compounds (e.g. urea) which decompose to produce ammonia as disclosed in U.S. Patent No. 6,281,296 B1.

Peroxides may also be utilized as curing agents, particularly when the cures site is a nitrile, iodine or bromine group. Useful peroxides are those which generate free radicals at curing temperatures. A dialkyl peroxide or a bis(dialkyl peroxide) which decomposes at a temperature above 50°C is especially preferred. In many cases it is preferred to use a ditertiarybutyl peroxide having a tertiary carbon atom attached to peroxy oxygen. Among the most useful peroxides of this type are 2,5-dimethyl-2,5-di(tertiarybutylperoxy)hexyne-3 and 2,5-dimethyl-2,5-di(tertiarybutylperoxy)hexane. Other peroxides can be selected from such compounds as dicumyl peroxide, dibenzoyl peroxide, tertiarybutyl perbenzoate, and di[1,3-dimethyl-3-(t-butylperoxy)butyl]carbonate. Generally, about 1-3 parts of peroxide per 100 parts of perfluoroelastomer is used.

Another material which is usually blended with the composition as a part of the peroxide curative system is a coagent composed of a polyunsaturated compound which is capable of cooperating with the peroxide to provide a useful cure. These coagents can be added in an amount between 0.1 and 10 parts per 100 parts perfluoroelastomer, preferably between 2-5 phr. The coagent may be one or more of the following compounds: triallyl cyanurate; triallyl isocyanurate; tri(methylallyl)isocyanurate; tris(diallylamine)-s-triazine; triallyl phosphite; N,N-diallyl acrylamide; hexaallyl phosphoramide; N,N,N',N'-tetraalkyl tetraphthalamide; N,N,N',N'-tetraallyl malonamide; trivinyl isocyanurate; 2,4,6-trivinyl methyltrisiloxane; and tri(5-norbornene-2-methylene)cyanurate. Particularly useful is triallyl isocyanurate.

Depending on the cure sites present, it is also possible to use a dual cure system. For example, perfluoroelastomers having copolymerized units of nitrile-containing cure site monomers can be cured using a curative comprising a mixture of a peroxide in combination with an organotin curative and a coagent. Generally, 0.3-5 parts of peroxide, 0.3-5 parts of coagent, and 0.1-10 parts of organotin curative are utilized.

Additives, such as fillers (e.g. carbon black, barium sulfate, silica, aluminum oxide, aluminum silicate, and titanium dioxide), stabilizers, plasticizers, lubricants, and processing aids typically utilized in perfluoroelastomer compounding can be incorporated into the curable perfluoroelastomer compositions employed in the present invention, provided the additives have adequate stability and purity for the intended service conditions.

Aluminum substrates employed in this invention are used to form bonded metal-perfluoroelastomer parts such as door seals, gate valves, pendulum valves, solenoid tips, bonded piston seals, diaphragms, metal gaskets, etc. These parts are particularly useful in high temperature, corrosive environments such as in semiconductor manufacturing equipment, chemical processing equipment and in some analytical instrumentation.

The surface of the aluminum substrate which is to be bonded to the curable perfluoroelastomer composition is pretreated by anodizing to form a porous surface structure. A preferred means for anodizing the aluminum surface is phosphoric acid anodization. In this process, the surface of the aluminum substrate is first cleaned, if necessary, with a base such as a NaOH solution. The clean surface is then anodized according to ASTM D3933 - 98 to form a porous surface. The pores are not filled in prior to bonding perfluoroelastomer to the porous surface.

A curable perfluoroelastomer composition is compression molded onto the porous surface of the aluminum substrate. Molding takes place under pressure and at an elevated temperature for a time sufficient to at least partially cure (i.e. vulcanize or crosslink) the perfluoroelastomer and bond it to the aluminum substrate. Bonding is enhanced by perfluoroelastomer flowing under pressure into the porous surface structure of the aluminum substrate prior to crosslinking. Optionally, the resulting perfluoroelastomer-aluminum part may be post cured at an elevated temperature for a time sufficient to improve the physical properties of the elastomer (e.g. compression set resistance and tensile strength) and the bonding strength of the cured elastomer to the aluminum substrate. Post curing may take place in an air oven or in an inert atmosphere such as a nitrogen gas filled oven. Typical compression molding conditions are 4 to 8 minutes at a temperature between 180°C and 220°C. Typical post cure conditions are 5 to 48 hours at a temperature between 250°C and 315°C.

The following examples illustrate preferred embodiments of the present invention wherein all parts are by weight unless otherwise indicated.

### EXAMPLES

### Test Method

Adhesion Force, i.e. the force required to pull cured perfluoroelastomer from an aluminum substrate, was measured according to ASTM D429, Method B.

### Example 1

The perfluoroelastomer employed was a copolymer containing 68 mole percent units of TFE, 31 mole percent units of PMVE and 1 mole percent units of perfluoro(8-cyano-5-methyl-3,6-dioxa-1-octene) prepared according to the general process described in U.S. Patent No. 5,789,489. A curable composition was made by compounding the perfluoroelastomer with urea and carbon black.

The aluminum substrates employed were type A6061 having a surface smoothness (prior to anodizing) of Ra 1.6-3.2.

A sample (Sample 1) prepared according to the process of the invention was made by anodizing a surface of a clean 60mm x 25mm x 2mm aluminum substrate according to ASTM D3933 to form a porous surface. The pores were not filled in prior to contact with perfluoroelastomer. A curable perfluoroelastomer composition was press cured onto the anodized aluminum surface for 4 minutes at 190°C. The resulting part was then post cured in an air oven at 305°C for 10 hours.

Adhesive force was measured according to the Test Method. The result is shown in Table II. The cured perfluoroelastomer tore, rather than pulling cleanly from the anodized aluminum substrate.

A control (Sample A) was made in the same manner as Sample 1 except that the surface of the aluminum substrate was not anodized. Adhesive force was measured and the results are shown in Table I. Cured perfluoroelastomer cleanly separated from the aluminum substrate.

A second control (Sample B) was made in the same manner as Sample A except that the unanodized aluminum surface was pretreated with Chemlock 607 (available from Lord Corp.) Chemlock 607 is an amino-silane bonding agent commonly used in the industry for adhering fluoroelastomers to metal surfaces. Adhesive force was measured and the results are shown in Table I. Cured perfluoroelastomer cleanly separated from the aluminum substrate.

**TABLE I**

| **Sample** | **Adhesive Force, N/25 mm** |
|---|---|
| 1 | 80 |
| A | 0 |
| B | 0 |

## Claims

1. A process for bonding a curable perfluoroelastomer composition to a surface of an aluminum substrate said process comprising:
a) anodizing a surface of an aluminum substrate to form a porous surface; and b) compression molding and vulcanizing a curable perfluoroelastomer onto said porous surface to form a crosslinked perfluoroelastomer article bonded to said aluminum substrate, wherein
said perfluoroelastomer comprises copolymerized units of 53.0-79.9 mole percent tetrafluoroethylene, 20.0 - 46.9 mole percent perfluoro(methyl vinyl) ether and 0.4 to 1.5 mole percent nitrile-containing cure site monomer

2. The process of claim 1 wherein said compression molding is for 4 to 8 minutes at a temperature between 180°C and 220°C.

3. The process of claim 1 further comprising c) post curing said perfluoroelastomer article bonded to said aluminum substrate for 5 to 48 hours at a temperature between 250°C and 315°C.

## Patentansprüche

1. Verfahren zum Binden einer härtbaren Perfluorelastomerzusammensetzung an eine Oberfläche eines Aluminiumsubstrats, wobei das Verfahren aufweist:
a) Anodisieren einer Oberfläche eines Aluminiumsubstrats, um eine poröse Oberfläche zu bilden; und
b) Formpressen und Vulkanisieren eines härtbaren Perfluorelastomers auf die poröse Oberfläche, um einen vernetzten Perfluorelastomer-Artikel zu formen, der an das Aluminiumsubstrat gebunden ist, wobei das Perfluorelastomer copolymerisierte Einheiten von 53,0-79,9 Mol-% Tetrafluorethylen, 20,0-46,9 Mol-% Perfluor(methylvinyl)ether und 0,4-1,5 Mol-% nitrilhaltigem Vernetzungsstellen-Monomer aufweist.

2. Verfahren nach Anspruch 1, wobei das Formpressen 4 bis 8 Minuten bei einer Temperatur zwischen 180°C und 220°C ausgeführt wird.

3. Verfahren nach Anspruch 1, das ferner aufweist: c) Nachhärten des an das Aluminiumsubstrat gebundenen Perfluorelastomer-Artikels während 5 bis 48 Stunden bei einer Temperatur zwischen 250°C und 315°C.

## Revendications

1. Procédé de liaison d'une composition élastomère perfluoré durcissable à une surface d'un substrat d'aluminium, ledit procédé comprenant :
a) l'anodisation d'une surface d'un substrat d'aluminium pour former une surface poreuse ; et
b) le moulage par compression et la vulcanisation d'un élastomère perfluoré durcissable sur ladite surface poreuse pour former un article d'élastomère perfluoré réticulé lié audit substrat d'aluminium, dans lequel ledit élastomère perfluoré comprend des motifs copolymérisés de 53,0 à 79,9 % en mole de tétrafluoroéthylène, 20,0 à 46,9 % en mole d'éther de perfluoro(méthyl vinyle) et 0,4 à 1,5 pourcent en mole d'un monomère à site de durcissement contenant du nitrile.

2. Procédé selon la revendication 1, dans lequel ledit moulage par compression est de 4 à 8 minutes à une température comprise entre 180°C et 220°C.

3. Procédé selon la revendication 1, comprenant en outre c) le post-durcissement dudit article d'élastomère perfluoré lié audit substrat d'aluminium durant 5 à 48 heures à une température comprise entre 250°C et 315°C.
